# EUROPEAN PATENT APPLICATION

(11) **EP 4 610 093 A1**
(43) Date of publication of application: **03.09.2025**
(21) Application number: 23882259.7
(22) Date of filing: 06.09.2023
(51) Int. Cl.: B60L 50/60, B60L 53/14, B66C 13/12, B66C 23/36

(54) **CRANE**

(30) Priority: 25.10.2022 JP 2022170623
(71) Applicant: TADANO LTD., Takamatsu-shi, Kagawa 761-0185 (JP)
(72) Inventor: NOGUCHI, Kazunari, Takamatsu-shi, Kagawa 761-0185 (JP)
(74) Representative: MFG Patentanwälte Meyer-Wildhagen Meggle-Freund Gerhard PartG mbB
(86) International application number: PCT/JP2023/032466
(87) International publication number: WO 2024/090046

(57) **Abstract**

This crane, which has a revolving body that supports a boom, comprises: a traveling vehicle body that has a main frame that supports the revolving body, and runs on electricity; a left outrigger support section and a right outrigger support section provided at the rear of the main frame so as to be shifted back and forth; and a power supply unit having a rechargeable battery that supplies the electricity to the traveling vehicle body, wherein the power supply unit includes a current conversion unit which is in a space above the right end of the left outrigger support section of the traveling vehicle body and on the right side of the main frame, and converts the alternating current supplied from the charging port into direct current and sends the direct current to the rechargeable battery.

## Description

### Technical Field

The present invention relates to a crane.

### Background Art

Patent Literature 1 discloses a mobile crane including a lower traveling vehicle body having a traveling function and an upper revolving body provided in a revolvable state on an upper part of the lower traveling vehicle body. The lower traveling vehicle body includes an engine and runs on engine power.

### Citation List

### Patent Literature

Patent Literature 1: JP 2021-46319 A

### Summary of the Invention

### Problems to be Solved by the Invention

In recent years, there has been a demand to make the aforementioned crane operated on electricity from the viewpoint of environmental protection and the like.

An object of the present invention is to provide a crane that can run on electricity.

### Solutions to Problems

An aspect of a crane according to the present invention is
a crane, which has a revolving body that supports a boom. The crane includes:
a traveling vehicle body that has a main frame that supports the revolving body, and runs on electricity;
a left outrigger support section and a right outrigger support section provided at the rear of the main frame so as to be shifted back and forth; and
a power supply unit having a rechargeable battery that supplies the electricity to the traveling vehicle body,
wherein the power supply unit includes a current conversion unit which is in a space above the left outrigger support section of the traveling vehicle body and on the right side of the main frame, and converts the alternating current supplied from the charging port into direct current and sends the direct current to the rechargeable battery.

### Effects of the Invention

According to the present invention, it is possible to provide a crane that can run on electricity.

### Brief Description of Drawings

Fig. 1 is a schematic view of a mobile crane according to an embodiment.
Fig. 2 is a block diagram schematically illustrating a configuration of a high-voltage system.
Fig. 3 is a plan view of components of a main frame and the high-voltage system.
Fig. 4 is an enlarged view corresponding to an X₁ portion in Fig. 3.
Fig. 5 is a view as viewed in the direction of arrow A₁ in Fig. 3.
Fig. 6 is a view as viewed in the direction of arrow A₂ in Fig. 3.
Fig. 7 is a view as viewed in the direction of arrow A₃ in Fig. 3.
Fig. 8 is a view as viewed in the direction of arrow A₄ in Fig. 3.

### Description of Embodiments

Hereinafter, an example of an embodiment according to the present invention will be described in detail with reference to the drawings. Note that a crane according to the embodiment described later is an example of a crane according to the present invention, and the present invention is not limited to the embodiment described later.

### [Embodiment]

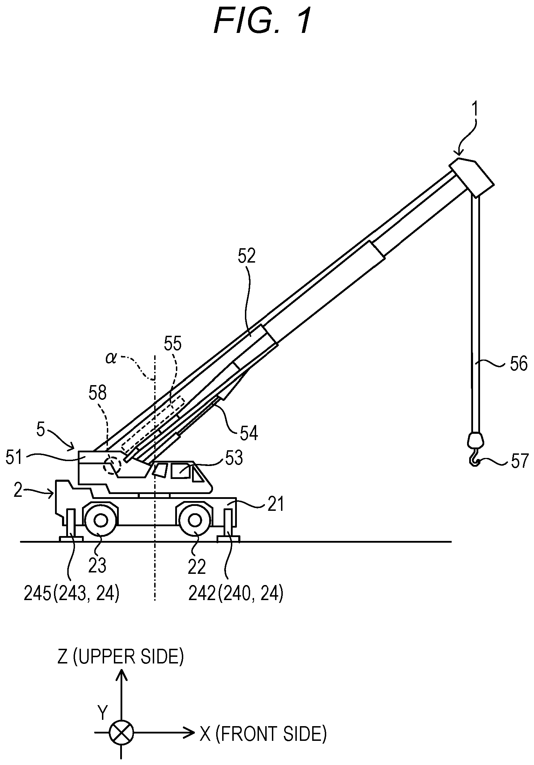

Fig. 1 is a schematic view of a mobile crane 1 (in the illustrated case, a rough terrain crane) according to the present embodiment. Examples of the mobile crane include an all-terrain crane, a truck crane, and a truck loader crane (also referred to as a cargo crane).

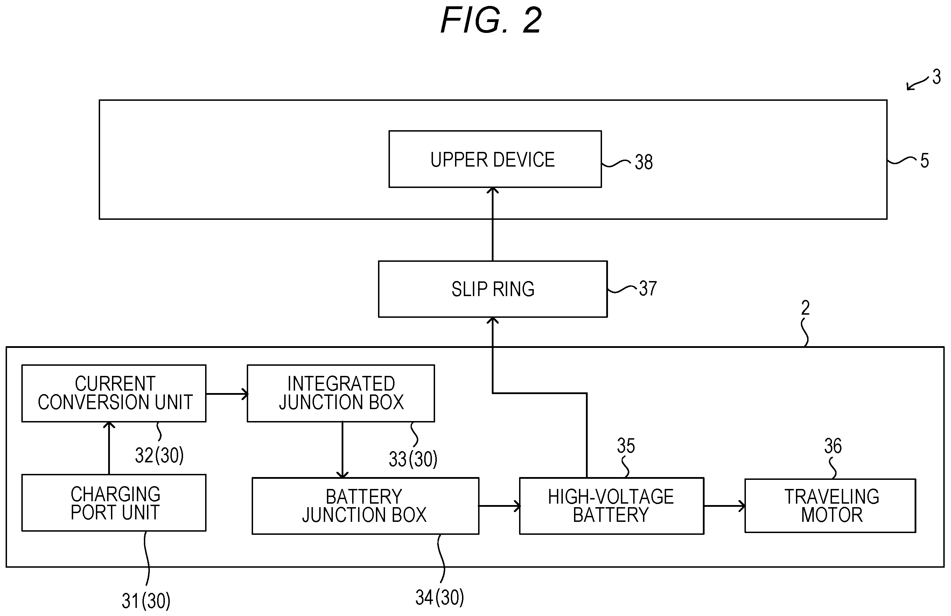

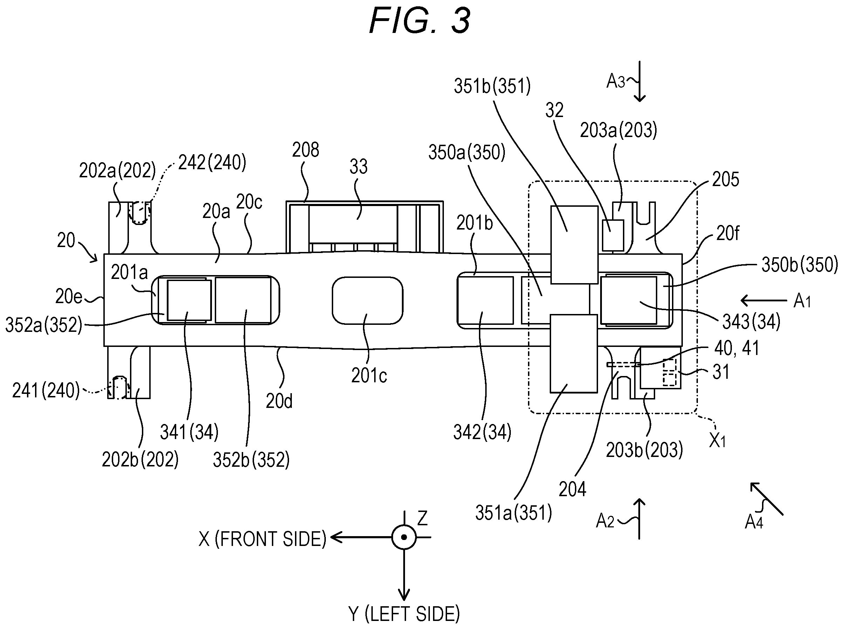

The mobile crane 1 includes a lower traveling vehicle body 2 and an upper revolving body 5. The mobile crane 1 is an electric crane including a high-voltage battery 35 (see Figs. 2 and 3). The mobile crane 1 runs on electricity supplied from the high-voltage battery 35. That is, the mobile crane 1 does not include an engine.

In addition, the mobile crane 1 may execute an operation other than running (for example, a crane operation and/or heating) on the basis of the electricity supplied from the high-voltage battery 35. The crane operation includes, for example, a revolving operation and/or a winch operation in a cargo conveyance operation. Hereinafter, a specific configuration of the mobile crane 1 will be described.

First, the configuration of the upper revolving body 5 will be described with reference to Figs. 1 and 2. Fig. 1 is a schematic view of the mobile crane 1. Fig. 2 is a block diagram schematically illustrating a configuration of a high-voltage system 3 mounted on the mobile crane 1.

Note that the high-voltage system 3 is a system using the high-voltage battery 35 described later as a power source, and includes the high-voltage battery 35 and an element electrically connected to the high-voltage battery 35. Fig. 2 illustrates main elements constituting the high-voltage system 3. However, the high-voltage system 3 may include elements other than the main elements illustrated in Fig. 2.

The upper revolving body 5 is provided at the upper part of the lower traveling vehicle body 2, and can revolve about a revolving center axis α with respect to the lower traveling vehicle body 2. The upper revolving body 5 includes a revolving base 51, a telescopic boom 52, and a cab 53.

The revolving base 51 is supported by the upper part of the lower traveling vehicle body 2 via a bearing (not illustrated). The revolving base 51 revolves on the basis of the power generated by a revolving actuator (not illustrated) provided in the upper revolving body 5. In the present embodiment, the revolving actuator is a hydraulic motor. The motor operates on the basis of supply/discharge of hydraulic oil.

The hydraulic oil is supplied from the lower traveling vehicle body **2.** The revolving actuator may be an electric actuator (for example, an electric motor). In this case, the revolving actuator is driven on the basis of electricity supplied from the high-voltage battery 35 described later.

The telescopic boom 52 is supported by the revolving base 51 and includes a plurality of telescopically combined booms. The telescopic boom 52 is derricked on the basis of the power generated by a derricking actuator (specifically, a derricking cylinder 54).

The derricking cylinder 54 is a telescopic hydraulic cylinder and is provided in the upper revolving body 5. The derricking cylinder 54 operates on the basis of supply or discharge of hydraulic oil. Note that the hydraulic oil is supplied from the lower traveling vehicle body 2.

Note that the derricking actuator may be an electric actuator (for example, an electric motor). In this case, the derricking actuator is driven on the basis of electricity supplied from the high-voltage battery 35 described later.

The telescopic boom 52 extends and retracts on the basis of the power generated by a telescopic actuator (specifically, a telescopic cylinder 55). The telescopic cylinder 55 is a hydraulic cylinder and is provided inside the telescopic boom 52.

The telescopic cylinder 55 operates on the basis of supply/discharge of hydraulic oil. Note that the hydraulic oil is supplied from the lower traveling vehicle body 2. Note that the telescopic actuator may be an electric actuator (for example, an electric motor). In this case, the telescopic actuator is driven on the basis of electricity supplied from the high-voltage battery 35 described later.

The telescopic boom 52 supports a wire rope 56. The wire rope 56 hangs down from the tip end of the telescopic boom 52, and is provided at the tip end thereof with a hook 57. A part of the wire rope 56 is wound around a winch 58.

The winch 58 is driven on the basis of the power generated by a winch actuator (not illustrated). In the present embodiment, the winch actuator is provided in the revolving base 51 and is a hydraulic motor. The motor operates on the basis of supply or discharge of hydraulic oil.

The hydraulic oil is supplied from the lower traveling vehicle body 2. Note that the winch actuator may be an electric actuator (for example, an electric motor). In this case, the winch actuator is driven on the basis of electricity supplied from the high-voltage battery 35 described later.

When the winch 58 rotates, the wire rope 56 is wound up or unwound according to the rotation direction of the winch 58. The motor for winching may be an electric motor. In this case, the electric motor for winching is driven on the basis of electricity supplied from the high-voltage battery 35 described later.

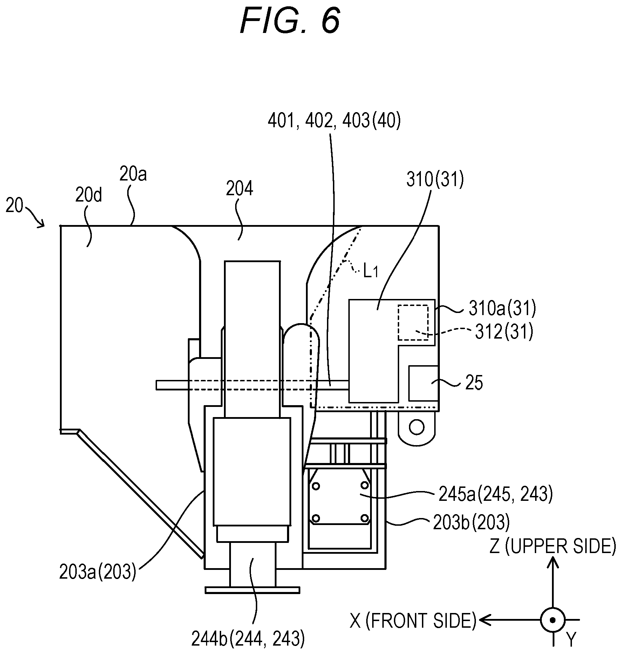

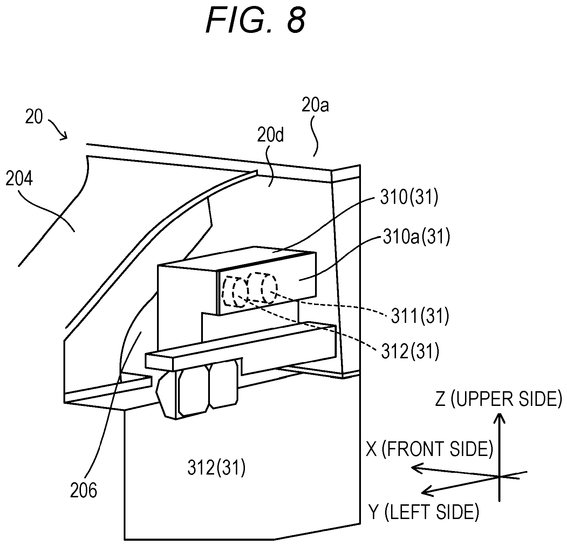

Next, the lower traveling vehicle body 2 will be described with reference to Figs. 1 to 8. In describing the structure of the lower traveling vehicle body 2, an orthogonal coordinate system (X, Y, and Z) illustrated in each drawing is used. The X direction corresponds to the front-rear direction of the lower traveling vehicle body 2. The + side in the X direction corresponds to the front side of the lower traveling vehicle body 2. The - side in the X direction corresponds to the rear side of the lower traveling vehicle body 2. The Y direction corresponds to the right-left direction of the lower traveling vehicle body 2 and the vehicle width direction of the mobile crane 1. The + side in the Y direction corresponds to the left side when the front is viewed from the lower traveling vehicle body 2. The - side in the Y direction corresponds to the right side when the front is viewed from the lower traveling vehicle body 2. The Z direction corresponds to the up-down direction of the lower traveling vehicle body 2. The + side in the Z direction corresponds to the upper side of the lower traveling vehicle body 2. The - side in the Z direction corresponds to the lower side of the lower traveling vehicle body 2.

The lower traveling vehicle body 2 can run on electricity. Specifically, the lower traveling vehicle body 2 includes a main frame 20, a body 21,a front tire 22, a rear tire 23, and an outrigger 24.

As illustrated in Fig. 3, the main frame 20 is a box-shaped member extending in the front-rear direction and having a rectangular cross-sectional shape, and constitutes a framework of the lower traveling vehicle body 2. The main frame 20 includes an upper plate portion 20a, a lower plate portion 20b, a right plate portion 20c, a left plate portion 20d, a front plate portion 20e, and a rear plate portion 20f.

The main frame 20 has a front battery housing space 201a and a rear battery housing space 201b formed by through holes penetrating the main frame 20 in the up-down direction.

The front battery housing space 201a is provided between the central portion and the front end portion of the main frame 20 in the front-rear direction.

In addition, the rear battery housing space 201b is provided between the central portion and the rear end portion of the main frame 20 in the front-rear direction.

In the main frame 20, the cross-section of a portion where the front battery housing space 201a or the rear battery housing space 201b is formed is a closed cross-section including a plurality of continuous plate portions. Note that the cross-section of the main frame 20 means a section taken along a YZ plane from the main frame 20.

In addition, the main frame 20 has at the central portion in the front-rear direction a slip ring arrangement space 201c formed by a through hole penetrating the main frame 20 in the up-down direction.

The main frame 20 has a front outrigger support section 202 at the front end portion. The front outrigger support section 202 includes a left outrigger support section 202a and a right outrigger support section 202b.

The left outrigger support section 202a and the right outrigger support section 202b each has a tubular shape extending in the right-left direction. The left outrigger support section 202a and the right outrigger support section 202b are shifted back and forth and are adjacent to each other back and forth. The left outrigger support section 202a is provided at the front of the right outrigger support section 202b.

The main frame 20 has a rear outrigger support section 203 at the rear end portion. The rear outrigger support section 203 includes a left outrigger support section 203a and a right outrigger support section 203b.

The left outrigger support section 203a supports a left outrigger 244 of a rear outrigger 243 described later. The left outrigger support section 203a has a tubular shape extending in the right-left direction. The right end portion of the left outrigger support section 203a protrudes to the right side of the right plate portion 20c of the main frame 20. The left end portion of the left outrigger support section 203a protrudes to the left side of the left plate portion 20d of the main frame 20.

The right outrigger support section 203b supports a right outrigger 245 of the rear outrigger 243 described later. The right outrigger support section 203b has a tubular shape extending in the right-left direction. The right end portion of the right outrigger support section 203b protrudes to the right side of the right plate portion 20c of the main frame 20. The left end portion of the right outrigger support section 203b protrudes to the left side of the left plate portion 20d of the main frame 20.

The left outrigger support section 203a and the right outrigger support section 203b are arranged in a state of being shifted back and forth and in a state of being adjacent to each other back and forth. The left outrigger support section 203a is provided at the front of the right outrigger support section 203b.

The main frame 20 has a pair of support frames 204 and 205 at the rear end portion.

The support frame 204 corresponds to an example of a front support frame, and is a member for supporting the left outrigger support section 203a with respect to the main frame 20. The support frame 204 extends leftward from the left plate portion 20d of the main frame 20. The support frame 204 is provided above the left end portion of the left outrigger support section 203a in the rear outrigger support section 203. In other words, the support frame 204 is arranged on the front side of a space above the left end portion (base end portion) of the right outrigger 245 described later on the rear side and on the left side of the left plate portion 20d of the main frame 20. Note that a power supply unit 30 described later is provided in the space.

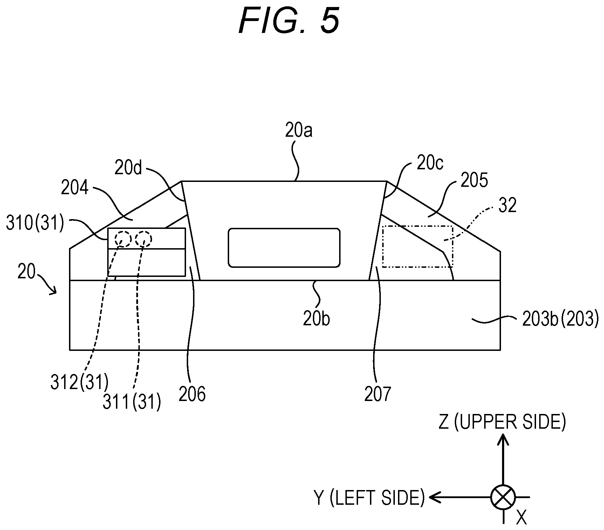

The right end portion of the support frame 204 is connected to the upper end portion of the left plate portion 20d. The left end portion of the support frame 204 is connected to the left end portion of the left outrigger support section 203a. As illustrated in Fig. 5, the support frame 204 is inclined such that the left end portion is located to be lower than the right end portion.

As illustrated in Fig. 3, the front side surface and the rear side surface of the right end portion (base end portion) of the support frame 204 are curved. Such a configuration contributes to prevention of occurrence of stress concentration at the right end portion (base end portion) of the support frame 204.

A tunnel-like space 206 (see Fig. 5) opened in the front-rear direction is provided below the support frame 204. The space 206 is defined by the lower surface of the support frame 204 and the upper surface of the left outrigger support section 203a. In the space 206, a cable 40 connecting a normal charging port 311 described later to a current conversion unit 32 and a cable 41 connecting a quick charging port 312 to an integrated junction box 33 are provided.

The support frame 205 corresponds to an example of a rear support frame, and is a member for supporting the right outrigger support section 203b with respect to the main frame 20. The support frame 205 extends rightward from the right plate portion 20c of the main frame 20. The support frame 205 is provided above the right end portion of the right outrigger support section 203b in the rear outrigger support section 203. In other words, the support frame 205 is arranged on the rear side of a space above the right end portion (base end portion) of the left outrigger 244 described later on the rear side and on the right side of the right plate portion 20c of the main frame 20. Note that the current conversion unit 32 described later is provided in the space.

The left end portion of the support frame 205 is connected to the upper end portion of the right plate portion 20c. The right end portion of the support frame 205 is connected to the right end portion of the right outrigger support section 203b. As illustrated in Fig. 5, the support frame 205 is inclined such that the right end portion is located to be lower than the left end portion.

As illustrated in Fig. 3, the front side surface and the rear side surface of the left end portion (base end portion) of the support frame 205 are curved. Such a configuration contributes to prevention of occurrence of stress concentration at the left end portion (base end portion) of the support frame 205.

A tunnel-like space 207 (see Fig. 5) opened in the front-rear direction exists below the support frame 205. The space 207 is defined by the lower surface of the support frame 205 and the upper surface of the right outrigger support section 203b. The front end and the rear end of the space 207 are opened.

In addition, the main frame 20 has a side support portion 208 at the central portion in the front-rear direction. In the present embodiment, the side support portion 208 is fixed to the right plate portion 20c of the main frame 20. The side support portion 208 supports the integrated junction box 33 described later.

The body 21 (see Fig. 1) is a member constituting the outer shape of the lower traveling vehicle body 2, and is supported by the main frame 20.

The front tires 22 are rotatably supported at both ends of a front axle (not illustrated). The rear tires 23 are rotatably supported at both ends of a rear axle (not illustrated).

The outrigger 24 includes a front outrigger 240 and the rear outrigger 243.

The front outrigger 240 includes a left outrigger 241 and a right outrigger 242. The left outrigger 241 is supported by the left outrigger support section 202a of the front outrigger support section 202. The right outrigger 242 is supported by the right outrigger support section 202b of the front outrigger support section 202.

The rear outrigger 243 is provided at the rear of the main frame 20. The rear outrigger 243 includes the left outrigger 244 and the right outrigger 245 provided to be shifted back and forth.

The left outrigger 244 corresponds to an example of a first outrigger, and is supported by the left outrigger support section 203a of the rear outrigger support section 203. The left outrigger 244 is an outrigger that stretches out to the left side during use. The left outrigger 244 includes a horizontal outrigger 244a and a vertical outrigger 244b.

The horizontal outrigger 244a extends in the right-left direction and is inserted into the left outrigger support section 203a of the rear outrigger support section 203. The horizontal outrigger 244a is movable in the right-left direction.

As described above, the left outrigger support section 203a is supported by the support frame 204. Therefore, it can be stated that the horizontal outrigger 244a is supported by the support frame 204.

The vertical outrigger 244b is fixed to the left end portion of the horizontal outrigger 244a. The vertical outrigger 244b is movable (extendable and retractable) in the up-down direction.

The right outrigger 245 corresponds to an example of a second outrigger, and is supported by the right outrigger support section 203b of the rear outrigger support section 203. The right outrigger 245 is an outrigger that stretches out to the right side during use. The right outrigger 245 is provided at the rear of the left outrigger 244.

The right outrigger 245 includes a horizontal outrigger 245a and a vertical outrigger 245b. The horizontal outrigger 245a extends in the right-left direction and is inserted into the right outrigger support section 203b of the rear outrigger support section 203.

The horizontal outrigger 245a is movable in the right-left direction. As described above, the right outrigger support section 203b is supported by the support frame 205. Therefore, it can be stated that the horizontal outrigger 245a is supported by the support frame 205.

The vertical outrigger 245b is fixed to the right end portion of the horizontal outrigger 245a. The vertical outrigger 245b is movable (extendable and retractable) in the up-down direction.

In addition, the mobile crane 1 of the present embodiment includes the high-voltage system 3. The high-voltage system 3 is a system for executing running of the lower traveling vehicle body 2 and an operation other than running in the mobile crane 1 (for example, a crane operation and/or heating) on the basis of electricity supplied from the high-voltage battery 35 described later. The configuration of the high-voltage system 3 will be described below.

Note that, although illustration and detailed description are omitted, the mobile crane 1 of the present embodiment also includes a low-voltage system. The low-voltage system is a system for executing predetermined processing on the mobile crane 1 on the basis of electricity supplied from a low-voltage battery (not illustrated) having a lower voltage than that of the high-voltage battery 35. The low-voltage system is also a system for transmitting a control signal for causing the mobile crane 1 to execute predetermined processing.

As illustrated in Fig. 2, the high-voltage system 3 includes the power supply unit 30, a traveling motor 36, a slip ring 37, and an upper device 38 as main elements.

The power supply unit 30 is a unit for charging the high-voltage battery 35. The power supply unit 30 includes a charging port unit 31, the current conversion unit 32, and the high-voltage battery 35. The power supply unit 30 also includes the integrated junction box 33 and a battery junction box 34.

The charging port unit 31 is provided at the rear end portion of the main frame 20. Specifically, the charging port unit 31 is arranged in a space above the rear outrigger 243 of the lower traveling vehicle body 2 and on the lateral side of the main frame 20. More specifically, the charging port unit 31 is arranged in a space above the left end portion (base end portion) of the right outrigger 245 on the rear side and on the left side of the left plate portion 20d of the main frame 20.

Note that, in the case of the present embodiment, the right outrigger 245 of the rear outrigger 243 is provided on the rear side of the left outrigger 244 of the rear outrigger 243. However, the configuration of the rear outrigger is not limited to the configuration of the rear outrigger 243 of the present embodiment. Specifically, the right outrigger of the rear outrigger may be provided on the front side of the left outrigger of the rear outrigger. In this case, the charging port unit may be arranged in a space above the right end portion (base end portion) of the left outrigger on the rear side and on the right side of the right plate portion 20c of the main frame 20. In addition, the current conversion unit 32 is arranged in a space above the left end portion (base end portion) of the right outrigger 245 on the rear side and on the left side of the left plate portion 20d of the main frame 20.

In other words, the charging port unit 31 is arranged in a space above a portion (the left end portion of the right outrigger support section 203b on the rear side) existing on the left side of the left plate portion 20d of the main frame 20 in the right outrigger support section 203b on the rear side. The space is also a space existing on the rear side of the support frame 204.

The charging port unit 31 includes a housing 310, the normal charging port 311, and the quick charging port 312.

The housing 310 has a box shape and has a housing portion. The housing 310 is supported by the main frame 20 via a support (not illustrated). The housing 310 has an openable and closable lid 310a on the rear side surface. The operator can access the housing portion by opening the lid 310a. Note that the shape of the housing is not limited to the shape of the housing 310 of the present embodiment.

In the main frame 20, lamps 25 are provided on the rear side of the rear end of the charging port unit 31 or below the lower end of the charging port unit 31. Such a configuration contributes to prevention of occurrence of damage in the charging port unit 31. The lamps 25 are, for example, brake lamps or direction indication lamps. Specifically, the lower end of the charging port unit 31 (the normal charging port 311 and the quick charging port 312) is located above the upper end of the lamps 25. In addition, the rear end of the charging port unit 31 (the normal charging port 311 and the quick charging port 312) is located on the front side of the rear end of the lamps 25.

The normal charging port 311 and the quick charging port 312 correspond to an example of a charging port, and are provided in the housing portion of the housing 310. The normal charging port 311 is a charging port for normal charging. When performing normal charging, the operator opens the lid 310a and connects a plug for normal charging of a charging facility to the normal charging port 311.

The quick charging port 312 is a charging port for quick charging. When performing quick charging, the operator opens the lid 310a and connects a plug for quick charging of a charging facility to the quick charging port 312.

In a case where the charging type is normal charging, an alternating current is supplied from the charging facility to the normal charging port 311. On the other hand, in a case where the charging type is quick charging, a direct current is supplied from the charging facility to the quick charging port 312.

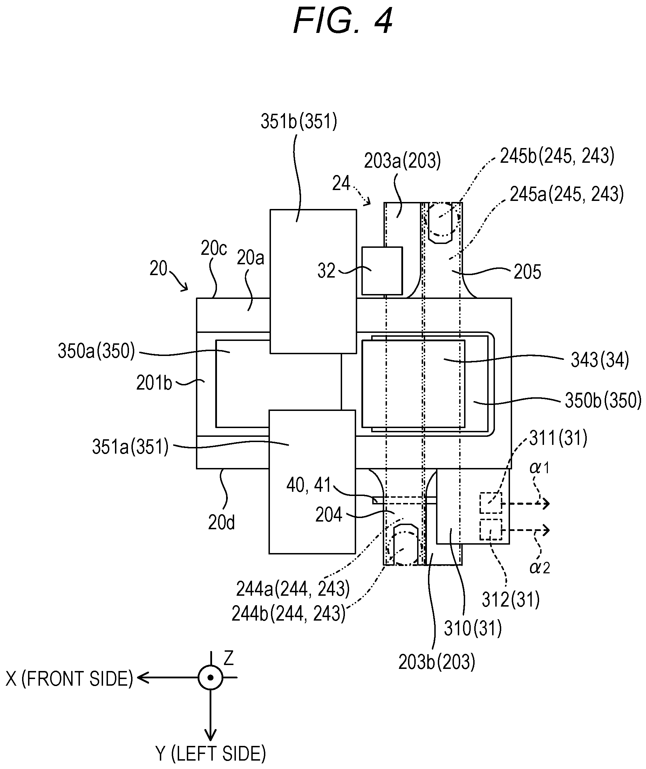

The normal charging port 311 is connected to the current conversion unit 32 described later via the cable 40 (see Figs. 3 and 4). The quick charging port 312 is connected to the integrated junction box 33 described later via the cable 41 (see Figs. 3 and 4). That is, the quick charging port 312 is not connected to the current conversion unit 32.

The upper end of the charging port unit 31 (housing 310) is located below the upper side surface (that is, the upper plate portion 20a) of the main frame 20. The rear end of the charging port unit 31 (housing 310) is located on the front side of the rear side surface (that is, the rear plate portion 20f) of the main frame 20. The upper ends of the normal charging port 311 and the quick charging port 312 are located below the upper side surface (that is, the upper plate portion 20a) of the main frame 20. The rear ends of the normal charging port 311 and the quick charging port 312 are located on the front side of the rear side surface (that is, the rear plate portion 20f) of the main frame 20. Such a configuration contributes to prevention of occurrence of damage in the charging port unit 31 (in particular, the normal charging port 311 and the quick charging port 312).

In addition, the charging port unit 31 includes various indicators (not illustrated). The indicators include, for example, an indicator indicating a charging state of the high-voltage battery 35. Such indicators are also arranged in the housing portion of the housing 310.

The normal charging port 311 and the quick charging port 312 face rearward. Here, the state of facing backward means a state in which normal lines α₁ and α₂ of the rear end surfaces of the normal charging port 311 and the quick charging port 312 each include a rearward component (component on the - side in the X direction). In the case of the present embodiment, the normal charging port 311 and the quick charging port 312 are oriented such that the normal lines α₁ and α₂ are parallel to the front-rear direction (in other words, only rearward components). Note that the normal charging port 311 and the quick charging port 312 may be arranged such that the normal lines α₁ and α₂ face, for example, diagonally rearward to the left.

The current conversion unit 32 includes an on-board charger, and is provided in a space above the left outrigger 244 of the lower traveling vehicle body 2 and on the lateral side of the main frame 20. Specifically, the current conversion unit 32 is arranged in a space above the right end portion (base end portion) of the left outrigger 244 on the rear side and on the right side of the right plate portion 20c of the main frame 20.

In other words, the current conversion unit 32 is arranged in a space existing above a portion (the right end portion of the left outrigger support section 203a on the rear side) existing on the right side of the right plate portion 20c of the main frame 20 in the left outrigger support section 203a on the rear side. The space is also a space existing between the support frame 205 and a tire fender 230 of the right-side rear tire 23 in the front-rear direction. The tire fender 230 corresponds to an example of a rear wheel fender.

The current conversion unit 32 converts the alternating current supplied from the charging port unit 31 into direct current. Then, the current conversion unit 32 sends the direct current to the high-voltage battery 35.

Specifically, an input-side terminal (not illustrated) of the current conversion unit 32 is connected to the normal charging port 311 via the cable 40. An output-side terminal (not illustrated) of the current conversion unit 32 is connected to an input-side terminal (not illustrated) of the integrated junction box 33 described later via a cable (not illustrated). The current conversion unit 32 sends direct current to the high-voltage battery 35 via the integrated junction box 33.

The current conversion unit 32 includes a plurality of current conversion devices. Specifically, the current conversion unit 32 includes a first current conversion device 321, a second current conversion device 322, and a third current conversion device 323. Note that the number of current conversion devices is not limited to the number of current conversion devices in the present embodiment.

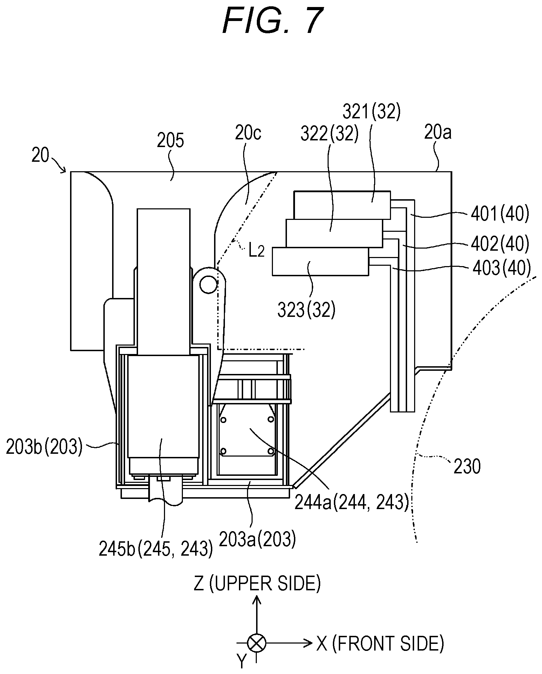

As illustrated in Fig. 7, the first current conversion device 321, the second current conversion device 322, and the third current conversion device 323 are provided in a state of being offset in the front-rear direction and in a state of being stacked in the up-down direction. The rear end surface and the front end surface of the first current conversion device 321 arranged in the upper stage are located on the front side of the rear end surface and the front end surface of the second current conversion device 322 and those of the third current conversion device 323. The rear end surface and the front end surface of the second current conversion device 322 arranged in the middle stage are located on the front side of the rear end surface and the front end surface of the third current conversion device 323.

As illustrated in Fig. 7, the first current conversion device 321, the second current conversion device 322, and the third current conversion device 323 are arranged to conform to the shape (curved surface shape) of the front side surface of the support frame 205.

Input-side terminals (not illustrated) of the first current conversion device 321, the second current conversion device 322, and the third current conversion device 323 are connected to an output-side terminal (not illustrated) of the normal charging port 311 via a first cable 401, a second cable 402, and a third cable 403.

The first cable 401, the second cable 402, and the third cable 403 constitute the cable 40 described above. An electric path (cable 40) connecting the normal charging port 311 to the current conversion unit 32 is branched into three electric paths (the first cable 401, the second cable 402, and the third cable 403) inside the housing 310.

As illustrated in Fig. 7, the first cable 401, the second cable 402, and the third cable 403 extend downward from the first cable 401, the second cable 402, and the third cable 403, and are provided so as to pass under the main frame 20.

The output-side terminal (not illustrated) of the current conversion unit 32 (the first current conversion device 321, the second current conversion device 322, and the third current conversion device 323) is connected to the input-side terminal of the integrated junction box 33 described later via the cable (not illustrated).

The integrated junction box 33 is a device that supplies electricity (direct current) supplied from the charging port unit 31 to the high-voltage battery 35 in a distributed manner. The integrated junction box 33 is supported by the side support portion 208 of the main frame 20.

Specifically, an input-side terminal (not illustrated) for normal charging of the integrated junction box 33 is connected to the output-side terminal of the current conversion unit 32 via the cable (not illustrated). In addition, an input-side terminal (not illustrated) for quick charging of the integrated junction box 33 is connected to an output-side terminal (not illustrated) of the quick charging port 312 via the cable 41 (see Figs. 3 and 4).

An output-side terminal (not illustrated) of the integrated junction box 33 is connected to an input-side terminal (not illustrated) of the battery junction box 34 via a cable (not illustrated).

The battery junction box 34 is a device that supplies electricity supplied from the integrated junction box 33 to the high-voltage battery 35 in a distributed manner.

The battery junction box 34 includes a front junction box 341, a first rear junction box 342, and a second rear junction box 343.

The front junction box 341 is arranged above the front battery housing space 201a. That is, the front junction box 341 is arranged outside the main frame 20.

An input-side terminal (not illustrated) of the front junction box 341 is connected to the output-side terminal (not illustrated) of the integrated junction box 33 via a cable (not illustrated). An output-side terminal (not illustrated) of the front junction box 341 is connected to an input-side terminal (not illustrated) of a front battery 352 (a first front battery 352a and a second front battery 352b) described later via a cable (not illustrated).

The first rear junction box 342 is arranged at the front end portion of the rear battery housing space 201b. That is, the first rear junction box 342 is arranged inside the main frame 20.

The upper surface of the first rear junction box 342 is located below the upper surface (that is, the upper plate portion 20a) of the main frame 20. An input-side terminal (not illustrated) of the first rear junction box 342 is connected to the output-side terminal (not illustrated) of the integrated junction box 33 via a cable (not illustrated).

An output-side terminal (not illustrated) of the first rear junction box 342 is connected to an input-side terminal (not illustrated) of a rear internal battery 350 (a first rear internal battery 350a and a second rear internal battery 350b) described later via a cable (not illustrated).

The second rear junction box 343 is arranged at the rear end portion of the rear battery housing space 201b. The lower half portion of the second rear junction box 343 is arranged inside the main frame 20.

The upper half portion of the second rear junction box 343 is located above the upper side surface (that is, the upper plate portion 20a) of the main frame 20. The second rear junction box 343 is arranged on the rear side of the first rear junction box 342.

An input-side terminal (not illustrated) of the second rear junction box 343 is connected to the output-side terminal (not illustrated) of the integrated junction box 33 via a cable (not illustrated). An output-side terminal of the second rear junction box 343 is connected to an input-side terminal (not illustrated) of a rear external battery 351 (a first rear external battery 351a and a second rear external battery 351b) described later via a cable (not illustrated).

The high-voltage battery 35 corresponds to an example of a rechargeable battery, and supplies electricity to an electric device constituting the mobile crane 1.

The high-voltage battery 35 includes a plurality of batteries. Specifically, the high-voltage battery 35 includes the rear internal battery 350, the rear external battery 351, and the front battery 352.

The rear internal battery 350 includes the first rear internal battery 350a and the second rear internal battery 350b. The first rear internal battery 350a and the second rear internal battery 350b are arranged in the rear battery housing space 201b. In other words, the first rear internal battery 350a and the second rear internal battery 350b are arranged inside the main frame 20**.**

The upper end surfaces of the first rear internal battery 350a and the second rear internal battery 350b are located below the upper side surface (that is, the upper plate portion 20a) of the main frame 20. The first rear internal battery 350a and the second rear internal battery 350b are arranged side by side in the front-rear direction.

The first rear internal battery 350a and the second rear internal battery 350b are fixed to the main frame 20 via a fixing device such as a bracket (not illustrated).

Input-side terminals (not illustrated) of the first rear internal battery 350a and the second rear internal battery 350b are connected to the output-side terminal (not illustrated) of the first rear junction box 342 via a cable (not illustrated).

Output-side terminals (not illustrated) of the first rear internal battery 350a and the second rear internal battery 350b are connected to an input-side terminal (not illustrated) of the traveling motor 36.

A junction box and/or an inverter may be provided between the first rear internal battery 350a and the second rear internal battery 350b, and the traveling motor 36.

In the above manner, in the case of the present embodiment, since the dead space of the main frame 20 can be effectively utilized, the rear internal battery 350 can be arranged in a space-saving manner, and the rear internal battery 350 can be prevented from being damaged by impact or the like.

The rear external battery 351 includes the first rear external battery 351a and the second rear external battery 351b. The first rear external battery 351a and the second rear external battery 351b are arranged above the rear battery housing space 201b. In other words, the first rear external battery 351a and the second rear external battery 351b are arranged above the upper side surface (that is, the upper plate portion 20a) of the main frame 20.

That is, the first rear external battery 351a and the second rear external battery 351b are arranged outside the main frame 20. The first rear external battery 351a and the second rear external battery 351b are arranged side by side in the right-left direction.

The first rear external battery 351a and the second rear external battery 351b are fixed to the main frame 20 via a fixing device such as a bracket (not illustrated).

Input-side terminals (not illustrated) of the first rear external battery 351a and the second rear external battery 351b are connected to the output-side terminal (not illustrated) of the second rear junction box 343 via a cable (not illustrated).

Output-side terminals (not illustrated) of the first rear external battery 351a and the second rear external battery 351b are connected to an input-side terminal (not illustrated) of the traveling motor 36 via a cable (not illustrated).

A junction box and/or an inverter may be provided between the first rear external battery 351a and the second rear external battery 351b, and the traveling motor 36.

The front battery 352 includes the first front battery 352a and the second front battery 352b. The first front battery 352a and the second front battery 352b are arranged in the front battery housing space 201a. In other words, the first front battery 352a and the second front battery 352b are arranged inside the main frame 20.

The upper end surfaces of the first front battery 352a and the second front battery 352b are located below the upper side surface (that is, the upper plate portion 20a) of the main frame 20. The first front battery 352a and the second front battery 352b are arranged side by side in the front-rear direction.

The first front battery 352a and the second front battery 352b are fixed to the main frame 20 via a fixing device such as a bracket (not illustrated).

Input-side terminals (not illustrated) of the first front battery 352a and the second front battery 352b are connected to the output-side terminal (not illustrated) of the front junction box 341 via the cable (not illustrated).

Output-side terminals (not illustrated) of the first front battery 352a and the second front battery 352b are connected to an input-side terminal (not illustrated) of the traveling motor 36 via a cable (not illustrated).

A junction box and/or an inverter may be provided between the first front battery 352a and the second front battery 352b, and the traveling motor 36.

In the above manner, in the case of the present embodiment, since the dead space of the main frame 20 can be effectively utilized, the front battery 352 can be arranged in a space-saving manner, and the front battery 352 can be prevented from being damaged by impact or the like.

Next, a charging path for charging the high-voltage battery 35 will be described.

First, when charging the high-voltage battery 35 by normal charging, the operator opens the lid 310a of the charging port unit 31 and connects a plug for normal charging of the charging facility to the normal charging port 311.

Then, alternating current is supplied from the charging facility to the normal charging port 311. The alternating current is sent from the normal charging port 311 to the current conversion unit 32 via the cable 40. Then, in the current conversion unit 32, the alternating current is converted into direct current.

Thereafter, the direct current is sent to the high-voltage battery 35 via the integrated junction box 33 and the battery junction box 34.

Next, when charging the high-voltage battery 35 by quick charging, the operator opens the lid 310a of the charging port unit 31 and connects a plug for quick charging of the charging facility to the quick charging port 312.

Then, direct current is supplied from the charging facility to the quick charging port 312. The direct current is sent from the quick charging port 312 to the integrated junction box 33 via the cable 41.

Then, the direct current is sent from the integrated junction box 33 to the high-voltage battery 35 via the battery junction box 34.

The traveling motor 36 is driven on the basis of electricity supplied from the high-voltage battery 35 under the control of a control unit (not illustrated). The control unit adjusts the torque of the traveling motor 36.

The slip ring 37 is connected to the high-voltage battery 35 via a cable (not illustrated). The slip ring 37 is a device for sending electricity supplied from the high-voltage battery 35 from the lower traveling vehicle body 2 to the upper device 38 (see Fig. 2) of the upper revolving body 5.

The slip ring 37 is also a device for sending current flowing through the low-voltage system and a control signal from the lower traveling vehicle body 2 to the upper device 38 of the upper revolving body 5.

The upper device 38 is a device that is provided in the upper revolving body 5 and operates on the basis of electricity of the high-voltage battery 35. In a case where the revolving actuator is an electric motor, the electric motor for revolving corresponds to an example of an upper device. In a case where the winch actuator is an electric motor, the electric motor for winching corresponds to an example of an upper device. In this case, the slip ring 37 is connected to the electric motor for revolving and the electric motor for winching via an upper junction box (not illustrated). Such an upper junction box functions to distribute electricity supplied from the high-voltage battery 35 to the electric motor for revolving and the electric motor for winching via the slip ring 37.

When electricity of the high-voltage battery 35 is supplied, the electric motor for revolving is driven on the basis of the electric power. Then, the electric motor for revolving revolves the upper revolving body 5.

In addition, when electricity of the high-voltage battery 35 is supplied, the electric motor for winching is driven on the basis of the electric power. The electric motor for winching rotates a winch 58. As a result, the wire rope 56 is wound up or unwound, so that the hook 57 moves upward or downward.

### <Effects of Present Embodiment>

According to the present embodiment having such a configuration as above, the mobile crane 1 that can run on electricity of the high-voltage battery 35 can be achieved.

In addition, according to the present embodiment, the operation efficiency of the charging operation can be improved. In the case of the mobile crane 1 having the telescopic boom 52, since the telescopic boom 52 interferes with the charging facility, the mobile crane 1 cannot be parked as it faces forward in the parking space of the charging facility.

Therefore, in order to avoid interference between the telescopic boom 52 and the charging facility, the mobile crane 1 is parked as it faces rearward in the parking space of the charging facility. In the case of the present embodiment, since the normal charging port 311 and the quick charging port 312 are provided on the rear end portion of the mobile crane 1 in a state of facing rearward, the operator can efficiently perform the charging operation in a state where the mobile crane 1 is parked as it faces rearward in the parking space of the charging facility.

In addition, the operator may perform the charging operation when the mobile crane 1 is in an operating state. The operating state means a state in which the front outrigger 240 and the rear outrigger 243 stretch out. In the case of the present embodiment, the normal charging port 311 and the quick charging port 312 are provided on the rear end portion of the mobile crane 1 in a state of facing rearward. Therefore, when the operator connects the plug for charging of the charging facility to the normal charging port 311 or the quick charging port 312, the rear outrigger 243 does not become an obstacle. As a result, according to the present embodiment, the efficiency of the charging operation when the mobile crane 1 is in the operating state can be improved.

In addition, in a country where the mobile crane 1 travels on the left side of a public road like Japan, there may be a charging facility of a tandem parking system along the public road. In the case of the present embodiment, since the charging port unit 31 is provided in the vicinity of the left end portion on the rear side surface of the main frame 20, the charging port unit 31 can be arranged near the charging facility in a state where the mobile crane 1 is parked in the charging facility of the tandem parking system.

In addition, in the case of the present embodiment, the charging port unit 31 and the current conversion unit 32 are each arranged in a space above the rear outrigger 243 and on the lateral side of the main frame 20. The space is a space conditioned by the shapes of the support frames 204 and 205, the rear outrigger 243, the lamps 25, the tire fender 230 of the rear tire 23, and the like.

In the case of the present embodiment, the charging port unit 31 and the current conversion unit 32 with a devised configuration are each arranged in the space subjected to such various conditions. In this manner, according to the present embodiment, the space in the mobile crane 1 can be effectively used.

In addition, in the case of the present embodiment, as illustrated in Fig. 7, the first current conversion device 321, the second current conversion device 322, and the third current conversion device 323 constituting the current conversion unit 32 are provided in a state of being offset in the front-rear direction and in a state of being stacked in the up-down direction. Therefore, for example, a relatively large space for providing a cable or the like can be obtained between the front side surface of the support frame 205 and the current conversion unit 32. Such a configuration contributes to improvement of the degree of freedom of design. In addition, effects and advantages exhibited by the mobile crane 1 according to the present embodiment are as described above.

The entire disclosure of the specification, drawings, and abstract included in Japanese Patent Application No. 2022-170623 filed on October 25, 2022 is incorporated herein by reference.

### Industrial Applicability

A crane according to the present invention is not limited to a rough terrain crane and thus may be any type of mobile crane, such as an all-terrain crane, a truck crane, or a truck loader crane (also referred to as a cargo crane).

### Reference Signs List

- 1: Mobile crane
- 2: Lower traveling vehicle body
- 20: Main frame
- 20a: Upper plate portion
- 20b: Lower plate portion
- 20c: Right plate portion
- 20d: Left plate portion
- 20e: Front plate portion
- 20f: Rear plate portion
- 201a: Front battery housing space
- 201b: Rear battery housing space
- 201c: Slip ring arrangement space
- 202: Front outrigger support section
- 202a: Left outrigger support section
- 202b: Right outrigger support section
- 203: Rear outrigger support section
- 203a: Left outrigger support section
- 203b: Right outrigger support section
- 204, 205: Support frame
- 206, 207: Space
- 208: Side support portion
- 21: Body
- 22: Front tire
- 23: Rear tire
- 230: Tire fender
- 24: Outrigger
- 240: Front outrigger
- 241: Left outrigger
- 242: Right outrigger
- 243: Rear outrigger
- 244: Left outrigger
- 244a: Horizontal outrigger
- 244b: Vertical outrigger
- 245: Right outrigger
- 245a: Horizontal outrigger
- 245b: Vertical outrigger
- 25: Lamps
- 3: High-voltage system
- 30: Power supply unit
- 31: Charging port unit
- 310: Housing
- 310a: Lid
- 311: Normal charging port
- 312: Quick charging port
- 32: Current conversion unit
- 321: First current conversion device
- 322: Second current conversion device
- 323: Third current conversion device
- 33: Integrated junction box
- 34: Battery junction box
- 341: Front junction box
- 342: First rear junction box
- 343: Second rear junction box
- 35: High-voltage battery
- 350: Rear internal battery
- 350a: First rear internal battery
- 350b: Second rear internal battery
- 351: Rear external battery
- 351a: First rear external battery
- 351b: Second rear external battery
- 352: Front battery
- 352a: First front battery
- 352b: Second front battery
- 36: Traveling motor
- 37: Slip ring
- 38: Upper device
- 40: Cable
- 401: First cable
- 402: Second cable
- 403: Third cable
- 41: Cable
- 5: Upper revolving body
- 51: Revolving base
- 52: Telescopic boom
- 53: Cab
- 54: Derricking cylinder
- 55: Telescopic cylinder
- 56: Wire rope
- 57: Hook
- 58: Winch

## Claims

1. A crane, which has a revolving body that supports a boom, comprising:
a traveling vehicle body that has a main frame that supports the revolving body, and runs on electricity;
a left outrigger support section and a right outrigger support section provided at a rear of the main frame so as to be shifted back and forth; and
a power supply unit having a rechargeable battery that supplies the electricity to the traveling vehicle body,
wherein the power supply unit includes a current conversion unit which is in a space above the left outrigger support section of the traveling vehicle body and on a right side of the main frame, and converts alternating current supplied from a charging port into direct current and sends the direct current to the rechargeable battery.

2. The crane according to claim 1, wherein the main frame includes, on a rear side of the space, a rear support frame that extends to a lateral side from the main frame and supports the right outrigger support section, and
wherein the current conversion unit is arranged on a front side of the rear support frame, on a rear side of a rear wheel fender of the traveling vehicle body, and below an upper surface of the main frame.

3. The crane according to claim 1, wherein the main frame includes, on a rear side of the space, a rear support frame that extends to a lateral side from the main frame and supports the right outrigger support section, and
wherein the current conversion unit includes, on a front side of the rear support frame, a plurality of current conversion devices that are offset in a front-rear direction and are arranged to be stacked in an up-down direction.

4. The crane according to claim 1, wherein the charging port is arranged in a space above the right outrigger support section of the traveling vehicle body and on a lateral side of the main frame.

5. The crane according to claim 4, comprising:
an integrated junction box that is provided on a lateral side of a central portion of the main frame in a front-rear direction and supplies electricity supplied from the charging port to the rechargeable battery in a distributed manner,
wherein the current conversion unit is arranged between the charging port and the integrated junction box in a front-rear direction.
